Europäisches Patentamt

**European Patent Office**

Office européen des brevets

(19)

(11) Numéro de publication: **0 226 477**
**B1**

(12) **FASCICULE DE BREVET EUROPEEN**

(45) Date de publication du fascicule du brevet: **27.06.90**

(51) Int. Cl.⁵: **B 23 D 29/00** // B23D23/00

(21) Numéro de dépôt: **86402191.0**

(22) Date de dépôt: **03.10.86**

(54) **Appareil de coupe de tiges filetées.**

(30) Priorité: **07.10.85 FR 8514908**

(43) Date de publication de la demande:
**24.06.87 Bulletin 87/26**

(45) Mention de la délivrance du brevet:
**27.06.90 Bulletin 90/26**

(84) Etats contractants désignés:
**AT BE CH DE ES FR GB GR IT LI LU NL SE**

(56) Documents cités:
**FR-A-1 201 334**
**FR-A-2 078 868**
**US-A-1 623 689**
**US-A-3 089 241**
**US-A-3 495 331**

(73) Titulaire: **APPLICATIONS INDUSTRIELLES DE CHAMPAGNE**
**F-10240 Aulnay (FR)**

(72) Inventeur: **Gérard, Michel**
**35, rue du Bourgetet**
**F-10140 Vendeuvre (FR)**
Inventeur: **Déon, Jean-Pierre**
**F-10140 Vendeuvre (FR)**

(74) Mandataire: **Gérardin, Robert Jean René**
**PROT'INNOV INTERNATIONAL SA Résidence de l'Observatoire avenue Georges Clémenceau**
**Boîte Postale 2764**
**F-51066 Reims Cédex (FR)**

Courier Press, Leamington Spa, England.

## Description

L'invention concerne selon le préambule de la revendication 1, un appareil de coupe de tiges filetées, comportant un bâti et un levier multiplicateur d'effort.

Dans l'industrie du bâtiment, second oeuvre, il est connu de réaliser des faux-plafonds à partir de plaques, suspendues à la charpente par l'intermédiaire de tiges filetées de différentes longueurs, de rondelles et d'écrous. La coupe de tiges filetées s'effectue, à la demande, à l'aide d'une scie à métaux ou, pour les petits diamètres, d'une pince coupante standard ou de pinces spéciales telles que celles décrites dans le brevet dans Etats-Unis d'Amérique No US—A—1.623.689 ou le brevet français FR—A—1.201.334.

On connaît déjà un dispositif de coupe de tiges filetées correspondant au préambule de la revendication 1, tel que celui décrit dans la demande de brevet des Etats-Unis d'Amérique US—A—3.089.241 concernant un dispositif pour tronçonner des boulons ou des vis à filets, comprenant une partie fixe destinée à maintenir la tige filetée et une partie mobile glissant contre la partie fixe concourant au cisaillement de la tige filetée dans le plan de glissement. L'organe de maintien de la vis comporte au moins un trou fileté balayé par la partie mobile. Ce dispositif exige donc que la tige filetée soit préalablement vissée sur toute la longueur du tronçon à obtenir, avant sectionnement de la tige, ce qui entraîne une perte de temps et une gêne importante, sans pour autant éliminer les risques de déformation du filetage dans le plan de sectionnement, qui, comme avec le dispositif évoqué ci-dessus, entraîne des difficultés de mise en place des écrous sur la tige et rend nécessaire l'utilisation d'une clé.

La présente invention a pour but de remédier à ces inconvénients. L'invention, telle qu'elle est caractérisée dans les revendications, résout le problème consistant à sectionner une tige filetée, quelle que soit sa longueur, par mise en place transversale directe du dispositif de coupe, sans déformation du filet dans le plan de coupe.

L'appareil de coupe de tiges filetées selon l'invention se caractérise principalement en ce que l'appareil comprend un bâti et un levier multiplicateur d'effort, la partie fixe est amovible et ses parties fixe et mobile sont munies d'empreintes filetées demi-cylindriques de même dimension mais disposées en sens opposé.

Les empreintes filetées demi-cylindriques aménagées dans les parties fixe et mobile sont réalisées selon un même filetage correspondant à celui de la tige à sectionner.

La partie fixe est rendu amovible par l'intermédiaire d'une équerre fixée, par boulon, sur le bâti de l'appareil.

Les empreintes filetées demi-cylindriques correspondent chacune à un diamètre de tige filetée différent et sont disposées par ordre croissant des diamètres vers l'axe d'articulation de la partie mobile.

Les avantages obtenus grâce à cette invention consistent essentiellement en ce que le tronçonnage s'effectue directement, sans opération préalable d'introduction de la tige filetée dans le dispositif par positionnement a l'aide du pouce d'une main contre la partie fixe de l'appareil, et en ce que le ou les écrous peuvent être montés et vissés à la main sans tâtonnement, ni nécessité d'une clé, jusqu'à leur position définitive.

L'invention est exposée ci-après plus en détail à l'aide de dessins représentant seulement un mode de réalisation, sur lesquels:

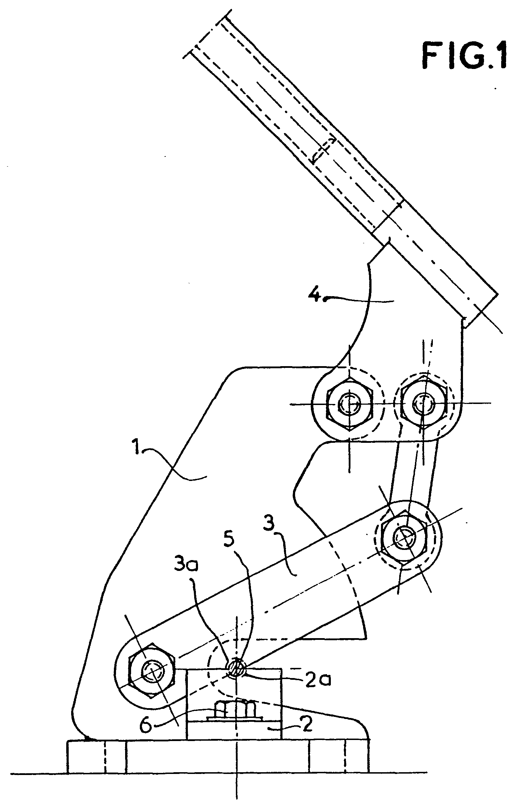

la figure 1 représente une vue de côté de l'appareil, au moment de la mise en contact des empreintes filetées sur la tige.

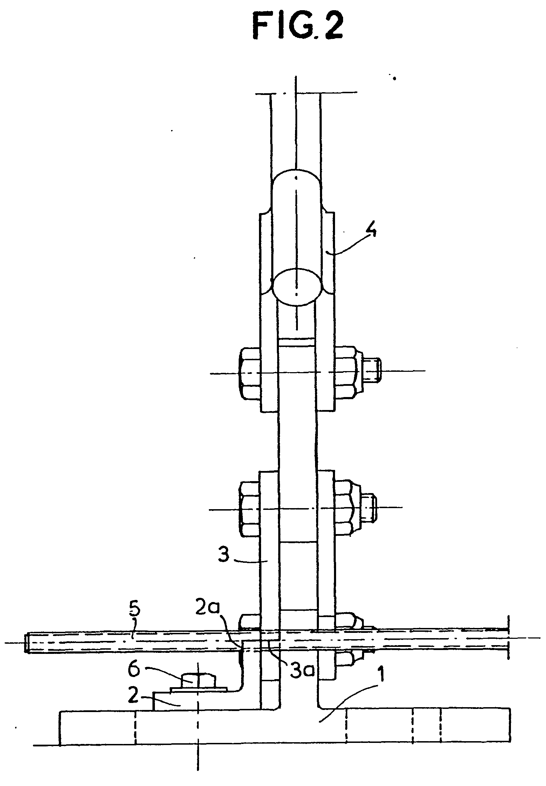

La figure 2 représente une vue de face de l'appareil dans les mêmes conditions qu'à la figure 1.

Les figures représentent un appareil de coupe de tiges filetées comprenant un bâti, comportant une partie fixe amovible 2, fixée par un boulon 6, munie, à sa partie supérieure, d'une empreinte filetée demi-cylindrique 2a, et par rapport auquel s'articule une partie mobile 3, munie, à sa partie inférieure, d'une autre empreinte filetée demi-cylindrique 3a, disposée dans le sens opposé à celle 2a aménagée dans la partie fixe 2. La partie mobile 3, glissant contre la partie fixe 2, est actionnée par un levier multiplicateur d'effort 4. Les empreintes filetées demi-cylindriques 2a et 3a, aménagées dans les parties fixe 2 et mobile 3, sont réalisées selon un même filetage correspondant à celui des tiges à sectionner. Les empreintes filetées 2a et 3a viennent en appui contre les tiges filetées 5, en épousant la forme du filet.

Conformément à la présente invention la tige filetée 5 est mise en place sur l'empreinte 2a en faisant coïncider, avec l'ongle d'un pouce, le plan de sectionnement choisi avec le bord interne de l'empreinte filetée 2a, puis le levier 4 est actionné pour obtenir l'articulation de la partie mobile 3 et la mise en appui de l'empreinte filetée 3a qu'elle comporte contre la tige filetée 5. Il suffit alors d'accenter l'effort, exercé sur le levier 4, pour obtenir le sectionnement net et précis de la tige filetée 5. Les tronçons de tiges obtenus peuvent être très facilement dégagés, puisqu'ils se trouvent totalement libérés dès le sectionnement.

Il est évident que les parties fixe 2 et mobile 3 peuvent comporteur plusieurs empreintes juxtaposées correspondant à des diamètres de tiges filetées différents. Il suffit simplement, pour une question d'effort de coupe, de disposer les empreintes filetées par ordre croissant des diamètres vers l'axe d'articulation de la partie mobile 3.

## Revendications

1. Appareil de coupe de tiges filetées comprenant une partie fixe (2) destinée à maintenir la tige filetée (5) et une partie mobile (3) glissant contre la partie fixe (2); les deux parties (2 et 3) concourant au cisaillement de ladite tige filetée (5) dans le plan de glissement, caractérisé en ce que l'appareil comprend un bâti et un levier multiplicateur d'effort, la partie fixe (2) est amovible et les parties fixe (2) et mobile (3) sont munies d'empreintes filetées demi-cylindriques (2a, 3a) de même dimension mais disposées en sens opposé.

2. Appareil de coupe de tiges filetées selon la revendication 1, caractérisé en ce que les empreintes filetées demi-cylindriques (2a, 3a), aménagées dans les parties fixe amovible (2) et mobile (3), sont réalisées selon un même filetage correspondant à celui de la tige à sectionner.

3. Appareil de coupe de tiges filetées selon la revendication 1, caractérisé en ce que la partie fixe (2) est rendue amovible par l'intermédiaire d'une équerre fixée, par boulon (6), sur le bâti (1) de l'appareil.

4. Appareil de coupe de tiges filetées selon la revendication 1, caractérisé en ce que les empreintes filetées demi-cylindriques (2a, 3a) correspondent chacune à un diamètre de tige filetée différent.

5. Appareil de coupe de tiges filetées selon la revendication 4, caractérisé en ce que les empreintes filetées demi-cylindriques (2a, 3a) sont disposées par ordre croissant de diamètres, vers l'axe d'articulation de la partie mobile (3).

**Patentansprüche**

1. Vorrichtung zum Schneiden von Gewindebolzen, umfassend ein feststehendes Teil (2) zum Halten des Gewindebolzens (5) und ein gegen das feststehende Teil (2) gleitendes bewegliches Teil (3), wobei die beiden Teile (2 und 3) während der Durchtrennung des Gewindebolzens (5) in der Gleitebene zusammenwirken, dadurch gekennzeichnet, daß die Vorrichtung ein Gestell und einen Kraftverstärkungshebel aufweist, das feststehende Teil (2) abnehmbar ist und das feststehende Teil (2) und das bewegliche Teil (3) jeweils eine halbzylindrische Ausnehmung (2a, 3a) mit einem Gewinde gleicher Dimension, aber in entgegengesetzter Richtung verlaufend, aufweisen.

2. Vorrichtung zum Schneiden von Gewindebolzen nach Anspruch 1, dadurch gekennzeichnet, daß die in dem feststestehenden, abnehmbaren Teil (2) und in dem beweglichen Teil (3) angeordneten halbzylindrischen, mit Gewinde versehenen Ausnehmungen, (2a, 3a) ein Gewinde aufweisen, das dem des zu schneidenden Gewindebolzens entspricht.

3. Vorrichtung zum Schneiden von Gewindebolzen nach Anspruch 1, dadurch gekennzeichnet, daß das festehende Teil (2) mittels eines Winkels, der mit Hilfe einer Schraube (6) an dem Gestell (1) der Vorrichtung befestigt ist, annehmbar gemacht ist.

4. Vorrichtung zum Schneiden von Gewindebolzen nach Anspruch 1, dadurch gekennzeichnet, daß die halbzylindrischen mit Gewinde versehenen Ausnehmungen (2a, 3a) jeweils einem anderen Gewindebolzendurchmesser entsprechen.

5. Vorrichtung zum Schneiden von Gewindebolzen nach Anspruch 4, dadurch gekennzeichnet, daß die halbzylindrischen mit Gewinde versehenen Ausnehmungen (2a, 3a) in steigender Durchmesserreihenfolge in Richtung zur Drehachse des beweglichen Teils (3) angeordnet sind.

**Claims**

1. Apparatus for cutting threaded rods comprising a fixed parts (2) means to hold the threaded rod (5) and a moving part (3) sliding against the fixed part (2); the two parts (2 and 3) concurrent with the said threaded rod (5) shearing in the sliding plane, wherein the apparatus comprises a frame and a lever-type force multiplier, the fixed part (2) is removable and the fixed (2) and moving (3) parts are supplied with semi-cylindrical threaded nests (2a, 3a) having the same size but provided in opposite direction.

2. Apparatus for cutting threaded rods as claimed in Claim 1, wherein the semi-cylindrical threaded nests (2a and 3a) located in the fixed part (2) and mobile part (3) are produced with the same thread as that corresponding to the rod to be cut.

3. Apparatus for cutting threaded rods as claimed in Claim 1, wherein the fixed part (2) is made removable by means of a square fixed by a bolt (6) on the frame (1) of the apparatus.

4. Apparatus for cutting threaded rods as claimed in Claim 1, wherein the threaded nests (2a, 3a) coincide each of them with a different diameter of threaded rod.

5. Apparatus for cutting threaded rods as claimed in Claim 4, wherein the semi-cylindrical threaded nests (2a, 3a) are arranged in increasing order of diameter toward the jointing axis of the moving part (3).

FIG.1

4

1

3

5

3a

2a

6

2

# FIG.2